# EUROPEAN PATENT APPLICATION

(11) **EP 1 298 897 A1**
(43) Date of publication of application: **02.04.2003**
(21) Application number: 01402466.5
(22) Date of filing: 26.09.2001
(51) Int. Cl.: H04M 3/22, H04L 12/24, H04Q 3/00

(54) **Networkmanagement with protocol conversion**

(71) Applicant: ALCATEL, 75008 Paris (FR)
(72) Inventor: Fumagalli, Aurelio, 23876 Monticello Brianza (Lecco) (IT); Fossati, Vittorio, 20061 Carugate (Milano) (IT); Perego, Maria Adele, 20045 Besana Brianza (Milano) (IT)
(74) Representative: Colombo, Stefano Paolo

(57) **Abstract**

A telecommunication equipment (E) comprises managed operative resources (MR) and a management unit (MU) for enabling the control and monitor of the resources by a management centre (MC); the management unit is designed to communicate with the management centre through a management network (MNW) by means of at least one management protocol (SNMP,CMIP); the management unit comprises at least:
a) a first module (M1,M4) designed to receive management commands from the management centre and to transmit management information to the management centre, and
b) a second module (M2,M5) designed to receive management commands from the first module and to transmit management information to the first module;
   the first module is further designed to generate and transmit a management command to the second module upon reception of a management command from the management centre.

## Description

The present invention refers to a manageable telecommunication equipment.

Telecommunication equipments are connected together by communication links (electrical, optical radio, etc.) to form communication networks; therefore they are often considered and called "network elements".

Telecommunication operators have the need to manage (i.e. to control and to monitor) their networks and, therefore, the network elements, i.e. the equipments.

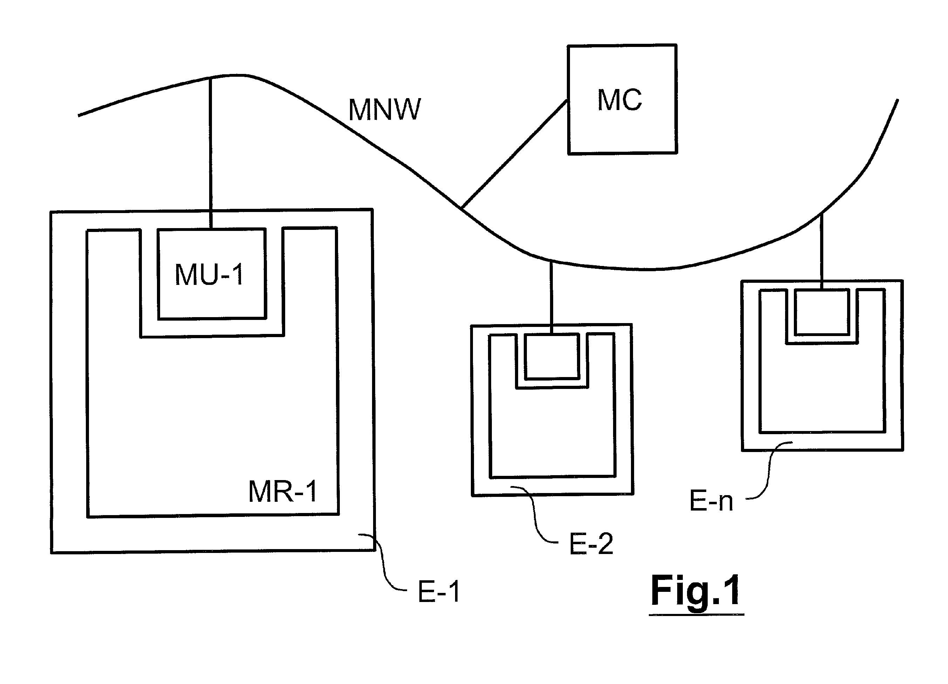

Therefore, in addition to the communication networks, there exist almost always management networks, labelled "MNW" in Fig.1, provided with one or more management centre, labelled "MC" in Fig.1 and often called "operations system" or "manager".

In order to be manageable, a telecommunication equipment E comprises a management unit MU in addition to the resources MR that primarily contributes to the operation of the equipment; the management unit MU controls and monitors the operative resources MR that are therefore "managed".

In fig.1 the management network MNW connects "n" telecommunication equipments but only three equipments E-1, E-2 and E-n are schematically shown; these equipments may well be quite different from each other.

Nowadays there are two very different management protocols that are well know and widespread : CMIP and SNMP; basically the first one is widespread particularly in Europe and the second one particularly in the USA.

These two very different management protocols implies, to a certain extent, also very different management styles by the operators.

If an equipment is to be sold both in Europe and the USA, it is necessary to develop two versions of the same equipment with two different management units.

Alternatively it would be possible to manufacture a single equipment having two different management units integrated in it.

The same considerations may apply to other management protocols and/or to other countries in the future.

It is the object of the present invention to provide a telecommunication equipment easily adaptable to being managed by means of different management protocols (at least two) that do not have the above-described disadvantages.

This object is achieved by the telecommunication equipment having the features set out in independent claim 1.

Considering that the management of every telecommunication equipment, irrespective of the management protocol used, can be reduced to a relatively limited number of low-level management actions to be carried out on the managed operative resources of the equipment, it has been conceived to introduce one or more levels intermediate between the high-level management protocol and the low-level management actions.

In this way, changing the management protocol will not imply the replacement of the management unit.

Additionally, providing more than one management protocols will not imply complete multiplication of the management units.

Further advantageous aspects of the present invention are set out the dependent claims.

The invention will become more apparent from the following description to be taken in conjunction with the accompanying drawings, wherein :
Fig.1 shows a group of telecommunication equipments connected to a management centre through a management network;
Fig.2 shows a block diagram of a first embodiment of a telecommunication equipment according to the present invention, wherein the management unit is particularly evidenced; and
Fig.3 shows a block diagram of a second embodiment of a telecommunication equipment according to the present invention, wherein the management unit is particularly evidenced.

Any telecommunication equipment E may be considered as comprising some managed operative resources MR and a management unit MU for enabling the control and monitor of the resources MR by a management centre MC; the management unit MU is designed to communicate with the management centre MC through a management network MNW by means of a certain management protocol, e.g. SNMP or CMIP.

It may happen that more than one management centre is connected to the same physical management network MNW.

It is to be noted that a number of different logical management networks may be implemented on the same physical management network.

A telecommunication equipment usually consists of a number of boards; at least one of these boards is dedicated only to management functions while most of the others are dedicated to operative telecommunication functions; those boards dedicated to telecommunication functions usually comprise also some hardware and software for performing management functions; as a matter of clarity, herein with the term "management unit" it is meant all the hardware and software comprised in the equipment for performing management functions.

The management of the equipment consists in controlling and monitoring the equipment E; the management unit MU of the equipment E receives management commands from the management centre MC; these may be both commands for controlling the operation of the equipment, and commands for monitoring the operation of the equipment, i.e. requests of the management information; in some cases the management unit MU may periodically transmit management information to the management centre MC.

In a telecommunication equipment according to the present invention, the management unit MU comprises :
a) a first module designed to receive management commands from a management centre and to transmit management information to the management centre, and
b) a second module designed to receive management commands from the first module and to transmit management information to the first module;
the first module is further designed to generate and transmit a management command to the second module upon reception of a management command from the management centre.

As it will be clearer from the following description, the first module may be designed, depending on how the invention is reduced to practice, to directly reply to some of the management commands received from the management centre instead of generating and transmitting a management command to the second module.

In those cases when the first module do not reply directly, it may (depending on how the invention is reduced to practice and, clearly, on the command received) generate and transmit more than one management commands to the second module.

For controlling purposes, the first module may be further designed to generate and transmit management information to the management centre upon reception of management information from the second module.

The management unit may comprise a first database for storing management information; a similar database is called "MIB" (Management Information Base) in the prior art; in this way, the first module may directly reply to some of the management commands received from the management centre, particularly to the monitoring commands.

In this case, upon reception of a controlling command the first module may generate one or more corresponding controlling commands and transmit them to the second module or, alternatively, the first module may process the controlling command and store some information into the first database and provide to the generation and transmission later on.

The database is a collection of management information and may be more or less orderly structured; the database may be accessed directly or through a database management software system.

In the case of a database, it is more efficient that the first module manage the database as it is in direct communication with the management centre; in this case the first module must be further designed to process and store management information received from the second module into the first database, and to retrieve, process and transmit management information from the first database to the management centre.

It is advantageous to implement these modules in software; in this case, transmission and reception of information can be implemented by calling inter-process communication software primitives or by calling software functions.

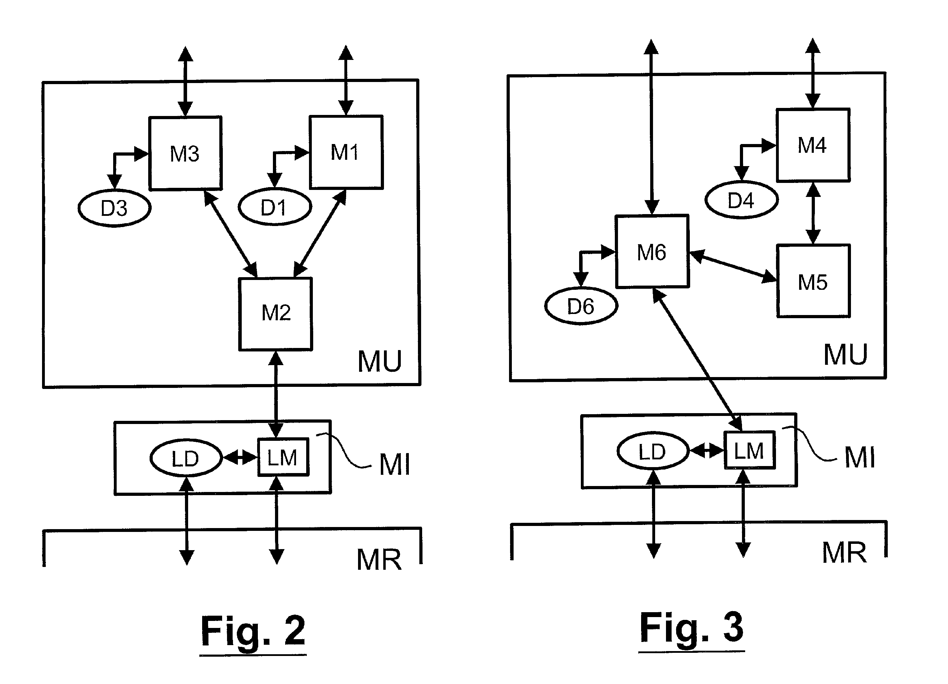

With reference to Fig.2, a first embodiment of the present invention will be described hereafter in detail.

In Fig.2, the first module described above corresponds to module M1, the second module described above corresponds to module M2, and the first database described above corresponds to database D1. By way of example, the first management protocol is SNMP.

The management unit MU comprises further a third module M3 designed to receive management commands from a management centre and to transmit management information to the management centre by means of a second management protocol different from the first one, e.g. CMIP; in this case, module M2 is further designed to receive management commands from module M3 and to transmit management information to module M3, and the module M3 is further designed to generate and transmit a management command to module M2 upon reception of a management command from a management centre.

Module M3 performs high-level management functions corresponding to those of module M1. Module M2 performs medium-level management functions; by means of these medium-level functions it is possible to perform all the high-level functions of modules M1 and M3.

For controlling purposes, module M3 may be further designed to generate and transmit management information to a management centre upon reception of management information from module M2.

As for module M1, the management unit MU may comprise a second database D3 for storing management information; in this case, module M3 is further designed to process and store management information received from module M2 into database D3, and to retrieve, process and transmit management information from database D3 to a management centre.

The two modules M1 and M3 may be activated alternatively or contemporaneously; in the first case, most probably, the equipment is managed by only one management centre and only one connection is necessary for connecting the equipment to the management network; in the second case, most probably, the equipment is managed by two different management centres and two connection are necessary for connecting the equipment to the management network or networks.

Finally, the module M2 is further designed to carry out a management action on the managed operative resources MR upon reception of every management command; this means that module M2 can not avail itself of any storage capacity of the management unit MU. Depending on the how the invention is reduced to practice and on the command received, further actions may be carried on by module M2.

With reference to Fig.3, a second embodiment of the present invention will be described hereafter in detail.

In Fig.3, the first module described above corresponds to module M4, the second module described above corresponds to module M5, and the first database described above corresponds to database D4. By way of example, the first management protocol is SNMP.

The management unit MU comprises further a fourth module M6 designed to receive management command from module M5 and to transmit management information to module M5; in this case, module M5 is further designed to generate and transmit a management command to module M6 upon reception of every management command from module M4; this means that module M5 can not avail itself of any storage capacity of the management unit MU. Depending on the how the invention is reduced to practice and on the command received, further commands may be generated and transmitted by module M5.

For controlling purposes, module M5 may be further designed to generate and transmit management information to module M4 upon reception of any management information from module M6; this means that module M5 can not avail itself of any storage capacity of the management unit MU even for this purpose.

In order that the equipment be managed by means of a different management protocol, module M6 may be further designed to receive management commands from a management centre and to transmit management information to the management centre by means of a second management protocol different from the first one, e.g. CMIP; in this case, module M6 is designed to communicate with module M5 by means of a communication protocol substantially identical to said second management protocol.

In this case, module M5 implements a sort of mapping of the high-level management primitives of the first management protocol, e.g. SNMP, into the high-level management primitives of the second management protocol, e.g. CMIP.

If module M6 is designed to communicate directly with a management centre, modules M4 and M5 may be deactivated when the equipment is managed by only one management centre connected through module M6 by means of only one management protocol.

Due to the fact that module M6 may communicate directly with a management centre, the management unit MU may advantageously comprise a third database D6 for storing management information; in this case, module M6 is further designed to process and store management information into database D6, and to retrieve, process and transmit management information from database D6 to module M5 and/or to a management centre; the "and" case applies when the equipment is managed contemporaneously by two different management centres communicating with the equipment by means of two different management protocols.

In this case, module M5 implements a sort of mapping of the management information stored in database D4 into the management information stored in database D6; this is possible provided that database D6 is equally or more complete than database D4; this is generally the case when module M4 is the SNMP module and module M6 is the CMIP module.

Finally, the module M6 is further designed to carry out a management action on the managed operative resources MR upon reception of a management command. Depending on the how the invention is reduced to practice and on the command received, further actions may be carried on by module M6.

The above mentioned modules M1, M2, M3, M4, M5, M6 are advantageously implemented in software.

In both embodiments described above a management internal interface MI can advantageously be provided for enabling management actions on the managed operative resources MR by the management unit MU; in this case, the management interface MI comprises a low-level management module LM designed to communicate with the management unit MU and to directly act on the managed operative resources MR; in the first embodiment module LM communicates with module M2, while in the second embodiment module LM communicates with module M6.

The management internal interface MI may be further provided with a low-level management database LD for storing low-level management information; in this case, the low-level module LM is further designed at least to retrieve low-level management information from the low-level database LD; database LD is less structured than databases D1, D3, D4, D6 and may well consists of a set of registers and/or buffers and/or flip-flops.

Depending on how the invention is reduced to practice, the storage of the information into database LD may be done by module LM and/or directly by a resource of the resources MR.

Database LD may also contribute directly to the control of the managed operative resources MR.

In the present description reference has always been made to CMIP and SNMP only because nowadays they are the most widespread management protocols; it is to be understood that the present invention may equally apply to other existing or future management protocols.

Finally, it is to be understood that, according to the invention and in case of need, further modules may be provided for allowing the equipment to be managed by means of further management protocols.

## Claims

1. Telecommunication equipment (E) comprising managed operative resources (MR) and a management unit (MU) for enabling the control and monitor of the resources (MR) by a management centre (MC), the management unit (MU) being designed to communicate with the management centre (MC) through a management network (MNW) by means of a first management protocol (SNMP), wherein the management unit (MU) comprises :
a) a first module (M1,M4) designed to receive management commands from the management centre (MC) and to transmit management information to the management centre (MC),
b) a second module (M2,M5) designed to receive management commands from the first module (M1,M4) and to transmit management information to the first module (M1,M4);
wherein the first module (M1,M4) is further designed to generate and transmit a management command to the second module (M2,M5) upon reception of a management command from the management centre (MC).

2. Equipment according to claim 1, wherein the first module (M1,M4) is further designed to generate and transmit management information to the management centre (MC) upon reception of management information from the second module (M2,M5).

3. Equipment according to claims 1 or 2, wherein the management unit (MU) comprises a first database (D1,D4) for storing management information, wherein the first module (M1,M4) is further designed to process and store management information received from the second module (M2,M5) into the first database (D1,D4), and wherein the first module (M1,M4) is further designed to retrieve, process and transmit management information from the first database (D1,D4) to the management centre (MC).

4. Equipment according to claims 1 or 2 or 3, wherein the management unit (MU) comprises further a third module (M3) designed to receive management commands from a management centre and to transmit management information to a management centre by means of a second management protocol (CMIP);
wherein the second module (M2) is further designed to receive management commands from the third module (M3) and to transmit management information to the third module (M3);
wherein the third module (M3) is further designed to generate and transmit a management command to the second module (M2) upon reception of a management command from a management centre.

5. Equipment according to claim 4, wherein the third module (M3) is further designed to generate and transmit management information to a management centre upon reception of management information from the second module (M2).

6. Equipment according to claims 4 or 5, wherein the management unit (MU) comprises a second database (D3) for storing management information, wherein the third module (M3) is further designed to process and store management information received from the second module (M2) into the second database (D3), and wherein the third module (M3) is further designed to retrieve, process and transmit management information from the second database (D3) to a management centre.

7. Equipment according to claims 4 or 5 or 6, wherein the second module (M2) is further designed to carry out a management action on the managed operative resources (MR) upon reception of every management command.

8. Equipment according to claims 1 or 2 or 3, wherein the management unit (MU) comprises further a fourth module (M6) designed to receive management command from the second module (M5) and to transmit management information to the second module (M5), and wherein the second module (M5) is further designed to generate and transmit a management command to the fourth module (M6) upon reception of every management command from the first module (M4).

9. Equipment according to claim 8, wherein the second module (M5) is further designed to generate and transmit management information to the first module (M4) upon reception of any management information from the fourth module (M6).

10. Equipment according to claims 8 or 9, wherein the fourth module (M6) is further designed to receive management commands from a management centre (MC) and to transmit management information to a management centre (MC) by means of a second management protocol (CMIP), and wherein the fourth module (M6) is designed to communicate with the second module (M5) by means of a communication protocol substantially identical to said second management protocol (CMIP).

11. Equipment according to claim 10, wherein the management unit (MU) comprises a third database (D6) for storing management information, wherein the fourth module (M6) is further designed to process and store management information into the third database (D6), and wherein the fourth module (M6) is further designed to retrieve, process and transmit management information from the third database (D6) to the second module (M5) and/or to a management centre.

12. Equipment according to any of claims from 8 to 11, wherein the fourth module (M6) is further designed to carry out a management action on the managed operative resources (MR) upon reception of a management command.

13. Equipment according to any of the preceding claims, comprising further a management internal interface (MI) for enabling management actions on the managed operative resources (MR) by the management unit (MU), wherein the management interface (MI) comprises a low-level management module (LM) designed to communicate with the management unit (MU) and to directly act on the managed operative resources (MR).

14. Equipment according to claim 13, wherein the management internal interface (MI) comprises further a low-level management database (LD) for storing low-level management information, and wherein the low-level module (LM) is further designed at least to retrieve low-level management information from the low-level database (LD).

15. Equipment according to any of the preceding claims, wherein the first (M1,M4) and/or the second (M2,M5) and/or the third (M3) and/or the fourth (M6) module is/are implemented in software.
